# EUROPÄISCHE PATENTSCHRIFT

(11) **EP 1 893 468 B1**
(45) Veröffentlichungstag und Bekanntmachung des Hinweises auf die Patenterteilung: **27.04.2011**
(21) Anmeldenummer: 06754890.9
(22) Anmeldetag: 27.04.2006
(51) Int. Cl.: B62D 15/02

(54) **VERFAHREN UND VORRICHTUNG ZUR AUSGABE VON EINPARKHINWEISEN**
METHOD AND DEVICE FOR OUTPUTTING PARKING INSTRUCTIONS
PROCEDE ET DISPOSITIF POUR FOURNIR DES INSTRUCTIONS DE MANOEUVRE DE STATIONNEMENT

(30) Priorität: 13.06.2005 DE 102005027165
(43) Veröffentlichungstag der Anmeldung: 05.03.2008
(73) Patentinhaber: ROBERT BOSCH GMBH, 70442 Stuttgart (DE)
(72) Erfinder: SCHERL, Michael, 74321 Bietigheim (DE); PREISSLER, Peter, 36460 Dorndorf (DE)
(86) Internationale Anmeldenummer: PCT/EP2006/061879
(87) Internationale Veröffentlichungsnummer: WO 2006/133996

(56) Entgegenhaltungen:
- EP-A- 1 403 138
- FR-A- 2 785 383

## Beschreibung

### STAND DER TECHNIK

Die vorliegende Erfindung betrifft ein Verfahren und eine Vorrichtung zur Ausgabe von Einparkhinweisen.

Die zunehmende Verkehrsdichte und verstärkte Bebauung freier Flächen engen den Verkehrsraum, insbesondere in Ballungszentren, kontinuierlich ein. Der zur Verfügung stehende Parkraum wird enger, und die Suche nach einer geeigneten Parklücke belastet den Fahrer zusätzlich zum immer mehr zunehmenden Verkehr. Daher wurden semiautonome Einparksysteme (SPA) entwickelt, welche den Fahrer beim Einparken unterstützen. Dem Fahrer wird dadurch die Entscheidung, ob die Parklücke passt oder nicht, erleichtert bzw. abgenommen. Anschließend gibt das System dem Fahrer Hinweise zum zügigen Einparken. Obwohl auf beliebige Parklücken anwendbar, werden die vorliegende Erfindung und die ihr zugrundeliegende Problematik anhand eines Einparkvorgangs eines Kraftfahrzeugs in eine Längsparklücke erläutert.

Aus der DE-OS 29 32 118 ist ein System zur Einparkunterstützung bekannt, das die Abstände zu Hindernissen in der Fahrzeugumgebung misst und den Fahrer vor einer Kollision mit diesen Hindernissen warnt. Allerdings erleichtert dieses System das Einparken an sich nicht, sondern warnt lediglich vor Kollisionen mit anderen Fahrzeugen bzw. Objekten.

In der DE 38 13 038 C3 wird ein Einparksystem beschrieben, welches die Parklücke während der Vorbeifahrt vermisst und den Fahrer beim Einparken unterstützt. Die vom Einparksystem geplante Einparktrajektorie besteht dabei aus geraden Stücken und Kreisbögen, d. h. der Fahrer lenkt nur im Stand. Die dazwischen liegenden sog. Umlenkpunkte können vom Fahrer nicht exakt angefahren werden. Der Fahrer wird sowohl bei der Querführung (Einstellen und Einhalten des gewünschten Lenkradwinkels) als auch bei der Längsführung (Anhalten am Anhalte- oder Umlenkpunkt) Fehler machen. Außerdem werden zusätzlich Fehler durch die Parklückenvermessung dazu führen, dass Anhaltepunkte korrigiert werden müssen. Je höher die Robustheit des Gesamtsystems gegenüber solchen Fehlern ist, desto höher ist die Akzeptanz beim Fahrer.

Ein Einparkvorgang verlangt vom Fahrer einerseits, das Lenkrad zum Einschlagen der Lenkung zu betätigen, und andererseits, das Fahrzeug durch Beschleunigen vorwärts bzw. rückwärts zu bewegen. Gegebenenfalls wird das Fahrzeug auch an einer dafür vorgesehenen Stelle gestoppt, um einen Richtungswechsel durch einen Lenkradeinschlag oder durch eine geänderte Gangwahl vornehmen zu können. Die Anweisungen sind dabei im allgemeinen so vorgesehen, dass der Fahrer, während er lenkt, nicht fahren soll, so dass also bei einem Lenkvorgang das Fahrzeug steht, während bei einer Fahrt im allgemeinen nicht zusätzlich noch der Lenkwinkel verändert werden soll. Insbesondere eindeutige Lenkpositionen werden dadurch erreicht, dass der Fahrer angewiesen wird, jeweils im Stand einen Volleinschlag der Lenkung vorzunehmen. Der Fahrer wird somit dazu angeleitet, einer Einparktrajektorie zu folgen, die aus graden Stücken oder gegebenenfalls aus möglichst engen Kreisbögen zusammengesetzt ist. Wird das Fahren und das Lenken getrennt, können unterschiedliche Eigenschaften der Fahrer hinsichtlich ihrer Reaktionszeit ausgeschlossen werden, da die einzelnen Aktionen unabhängig von der Bediengeschwindigkeit durch den Fahrer durchzuführen sind. Allerdings ist dieses Verfahren recht mühsam für den Fahrer.

Aus der älteren deutschen Patentanmeldung DE102004047484 ist ein Verfahren zur Ausgabe von Einparkhinweisen an einen Fahrer eines Fahrzeugs bekannt, wobei eine Lenkanweisung zum Einschlagen der Lenkung ausgegeben wird und wobei nach einer vorgegebenen Wegstrecke nach Ausgabe der Lenkanweisung eine Korrekturanweisung dann ausgegeben wird, wenn an einem Ende der vorgegebenen Wegstrecke nicht wenigstens ein vorgegebener Einschlagswinkel der Lenkung eingestellt worden ist.

Dieses Verfahren hat die Besonderheit, dass zunächst eine Lenkanweisung zum Einschlagen der Lenkung an den Fahrer ausgegeben wird, jedoch erst nach einem Zurücklegen einer vorgegebenen Wegstrecke überprüft wird, ob nun ein vorgegebener Einschlagswinkel eingestellt worden ist. Dies lässt dem Fahrer die Gelegenheit, den Lenkeinschlag auch während der Fahrt vorzunehmen. Hierdurch wird ein Lenken im Stand vermieden. Ferner kann der Benutzer innerhalb eines gewissen Toleranzbereichs auch in seiner ihm eigenen Lenkgeschwindigkeit das Lenkrad einschlagen. Er muss sich nicht auf eine vorgegebene Lenkgeschwindigkeit festlegen. Hierdurch wird das Lenken insbesondere während der Fahrt erleichtert. Kann während der Fahrt gelenkt werden, so ist ein niedrigeres Drehmoment für die Betätigung der Lenkung aufzuwenden, da die Lenkung bei einem Rollen des Fahrzeugs leichtgängiger ist, als bei einem stehenden Fahrzeug. Insgesamt ist der Einparkvorgang für den Fahrer angenehmer, da er mehr dem üblichen Einparkvorgang ohne Unterstützung entspricht, bei dem Lenken und Fahren im allgemeinen miteinander verbunden werden. Durch den flüssigeren Ablauf kann zudem die für den Einparkvorgang benötigte Zeit verringert werden. Hierdurch wird die Fahrbahn, die durch den Einparkvorgang möglicherweise zumindest teilweise blockiert wird, schneller wieder für den nachfolgenden Verkehr geräumt. Mittels der vorgegebenen Wegstrecke wird somit eine Umlenkzone definiert, innerhalb der der Fahrer eine notwendige Lenkänderung vornehmen kann. Indem am Ende der Umlenkzone dennoch kontrolliert wird, ob ein Umlenken erfolgt ist, kann für den Fall, dass der Fahrer nicht hinreichend das Lenkrad betätigt hat, noch eine Korrektur vorgenommen werden. Selbst für den Fall, dass der Fahrer nicht zutreffend gehandelt hat, ist zu diesem Zeitpunkt im allgemeinen noch eine Korrektur derart möglich, dass der Einparkvorgang fortgeführt und erfolgreich beendet werden kann. Dieses Verfahren hat allerdings den Nachteil, dass häufig nach dem Zurücklegen einer vorgegebenen Wegstrecke eine Korrektur erfolgen wird und der Fahrer stets auf eine anfangs berechnete Optimaltrajektorie zurückgeführt wird.

Die DE 103 31 235 A1 offenbart eine Fahrhilfsvorrichtung, insbesondere zum Einparken eines Fahrzeugs, mit einer Ausgabeeinheit zur Ausgabe von Fahrhinweisen an einen Fahrer, wobei dem Fahrer mit den Fahrhinweisen ein Fahrbereich zwischen zwei Trajektorien angegeben wird, die derart berechnet sind, dass das Fahrzeug innerhalb des Fahrbereichs bewegt werden kann, um einen Weg in die Parklücke frei zu wählen. Hierdurch muss er nicht einer einzigen, vorgegebenen Ideallinie folgen und hat dennoch die Sicherheit, kein Kollisionsrisiko einzugehen.

EP-A-1 403 138 offenbart ein Verfahren gemäß Oberbegriff der Ansprüche 1 und 2.

### VORTEILE DER ERFINDUNG

Das erfindungsgemäße Verfahren zur Ausgabe von Einparkhinweisen nach Anspruch 1 bzw. die entsprechende Vorrichtung nach Anspruch 10 weisen den Vorteil auf, dass eine große Robustheit durch eine Einbeziehung möglicher Fehler in die Trajektorienplanung gewährleistet ist. Ein durch eine derartige robuste Trajektorienplanung ausgezeichnetes System erlaubt größere Toleranzbereiche für die Fahreraktionen (Einhalten von Anhalteweg und Lenkradwinkel) und reduziert gleichzeitig die Anzahl erfolglos abgebrochener Einparkversuche aufgrund von Fahrer- oder Parklückenvermessungsfehlern. Auf diese Art und Weise erhöht sich die Akzeptanz des Gesamtsystems beim Fahrer.

Beim erfindungsgemäßen Verfahren zur Ausgabe von Einparkhinweisen an einen Fahrer eines Fahrzeugs umfasst der Einparkvorgang eine Mehrzahl von Sektionen mit einem jeweiligen konstanten Vorgabe-Lenkwinkel, wobei jeweils zwischen zwei Sektionen ein Anhaltepunkt liegt, der nach einer entsprechenden Anhalteanweisung innerhalb eines Anhaltewegs anzufahren ist.

Es wird zunächst eine Trajektorie berechnet und dem Fahrer der sich daraus ergebende notwendige Lenkwinkel vorgegeben. Anhand einer Trajektorienplanung unter Verwendung des aktuellen Lenkwinkels und der aktuellen Position wird zu jedem Zeitpunkt überprüft, ob der Einparkvorgang erfolgreich durchgeführt werden kann, d.h. die momentan vom Fahrer gewählte Trajektorie zu einem erfolgreichen Abschluss des Einparkvorganges führt. Solange dies der Fall ist, erfolgt kein Hinweis zur Unterbrechung, zur Korrektur oder zum Abbruch des Einparkvorganges. Dies hat den Vorteil, dass eine maximale Toleranz gegenüber Fehlern beim Lenken erzielbar ist, und zwar nicht nur beim ersten Einstellen des Lenkwinkels, sondern auch während der Fahrt. Verändert der Fahrer während einer Kreisfahrt den Lenkeinschlag, so wird dieser Fehler akzeptiert, d.h. die weitere Planung wird mit dem aktuellen Wert solange fortgesetzt, wie ein erfolgreiches Einparken möglich ist.

Die besondere Robustheit der Vorrichtung bzw. des Verfahrens gemäß der vorliegenden Erfindung wird dadurch erreicht, dass für den Anhalteweg und/oder den Lenkwinkel ein Toleranzband festgelegt wird und für eine jeweilige Sektion eine entsprechende Anhalteanweisung entsprechend einem Vorgabe-Anhalteweg und/oder ein entsprechender Vorgabe-Lenkwinkel unter Berücksichtigung des Toleranzbandes festgelegt werden.

Diese Robustheit macht sich insbesondere gegenüber Fehlern der folgenden Art bemerkbar:
- Fahrerfehler beim Einhalten des Lenkradwinkels während einer Geradeausfahrt oder der Fahrt auf einem Kreisbogen;
- Fahrerfehler beim Anhalten am Ende einer Sektion;
- Fehler bei der Vermessung der Parklückenbegrenzung.

Diese Robustheit lässt sich insbesondere durch folgende Maßnahmen erreichen:

Die Trajektorienplanung wird nicht nur zu Beginn des Einparkvorganges, sondern zyklisch immer dann durchgeführt, wenn das Fahrzeug bewegt wird.

Die Robustheit gegenüber Lenkradwinkelabweichungen wird dadurch erreicht, dass die zyklische Trajektorienplanung während der Fahrzeugbewegung immer den aktuellen Lenkradwinkels für die aktuelle Sektion berücksichtigt, und eine Korrektur des Lenkradwinkels nur dann fordert, wenn eine erfolgreiche Beendigung des Einparkvorganges mit dem aktuellen Lenkradwinkel nicht mehr möglich ist. Dadurch wird die maximal mögliche Toleranz gegenüber Fehlern beim Einhalten des Lenkradwinkels erreicht.

Die Robustheit gegenüber dem Einhalten der Anhaltepunkte (Längsführung) oder auch gegenüber Fehlern in der Parklückenvermessung wird dadurch erreicht, dass nicht eine optimale Trajektorie verfolgt wird, sondern eine solche ausgewählte Trajektorie, die auch bei Nichteinhaltung des nächsten oder optional aller folgenden Anhaltepunkte sicher zu einer erfolgreichen Beendigung des Einparkvorgangs führt, sofern sich der Zwischenpunkt innerhalb des möglichen Bereichs vom Zwischenpunkt der aktuellen Vorgabetrajektorie befindet.

Die in den Unteransprüchen aufgeführten Maßnahmen sind vorteilhafte Weiterbildungen und Verbesserungen des jeweiligen Gegenstandes der Erfindung.

Gemäß einer bevorzugten Weiterbildung wird während einer Fahranweisung zyklisch überprüft, ob der aktuelle Lenkwinkel in einem gültigen Bereich für ein erfolgreiches Einparken möglicher Lenkwinkel liegt. Eine Korrekturanweisung zum Anhalten und zum Einstellen eines korrigierten Lenkwinkels wird nur ausgegeben, falls der betreffende Lenkwinkel ausserhalb des Bereichs gültiger Lenkwinkel liegt.

Gemäß einer bevorzugten Weiterbildung wird unmittelbar nach dem Anhalten des Fahrzeuges an einem jeweiligen Anhaltepunkt überprüft, ob der Anhalteweg in einem gültigen Bereich für ein erfolgreiches Einparken möglicher Anhaltewege liegt. Eine Korrekturanweisung zum Einstellen des korrekten Anhaltewegs in Form einer zusätzlichen Sektion wird nur ausgegeben, falls der tatsächliche Anhalteweg ausserhalb des Bereichs gültiger Anhaltewege liegt.

Gemäß einer weiteren bevorzugten Weiterbildung wird das Toleranzband bzw. werden die Toleranzbänder dynamisch angepasst. Somit weist das Verfahren eine Lernfähigkeit auf, wodurch z.B. die Tagesform des Fahrers berücksichtigt werden kann.

Gemäß einer weiteren bevorzugten Weiterbildung erfolgt das dynamische Anpassen des Toleranzbandes für den Anhalteweg unter Berücksichtigung einer statistischen Varianz von erfassten Anhaltewegen.

Gemäß einer weiteren bevorzugten Weiterbildung erfolgt das dynamische Anpassen des Toleranzbandes für den Lenkwinkel unter Berücksichtigung einer statistischen Varianz von erfassten Lenkwinkeleinstellungen.

Gemäß einer weiteren bevorzugten Weiterbildung ist die Größe des jeweiligen Toleranzbandes entsprechend verschiedener Fahrerkategorien auswählbar.

Gemäß einer weiteren bevorzugten Weiterbildung wird anhand mindestens eines Kriteriums ein erfolgreicher Einparkvorgang im voraus definiert, wobei das Kriterium eine Mehrzahl von Endpositionen zulässt.

Gemäß einer weiteren bevorzugten Weiterbildung ist das Kriterium aus folgender Gruppe ausgewählt: maximale Anzahl von Zügen, minimale Zuglänge, maximales Hineinragen in die Gegenfahrbahn, minimaler bzw. maximaler Abstand zum Bordstein, maximaler Abstand zu einer durch benachbart parkende Fahrzeuge definierten Referenzlinie, maximale Winkelabweichung zur Bordsteinrichtung bzw. zu einer Referenzlinie, minimaler bzw. maximaler Abstand zu vorderer und hinterer Parklückenbegrenzung.

### ZEICHNUNGEN

Ausführungsbeispiele der Erfindung sind in der Zeichnung dargestellt und in der nachfolgenden Beschreibung näher erläutert.

Es zeigen:
Fig. 1 schematisch ein Fahrzeug mit einer Vorrichtung zur Ausgabe von Einparkhinweisen gemäß einer Ausführungsform der vorliegenden Erfindung;
Fig. 2 einen Einparkvorgang unter Ausnutzung der Vorrichtung zur Ausgabe von Einparkhinweisen gemäß der Ausführungsform der vorliegenden Erfindung;
Fig. 3 eine schematische Darstellung des noch zu fahrenden Anhaltewegs und einer robusten Anhaltewegvorgabe gemäß der Ausführungsform der vorliegenden Erfindung;
Fig. 4 eine schematische Darstellung des eingestellten Lenkwinkels und einer robusten Lenkwinkelvorgabe gemäß der Ausführungsform der vorliegenden Erfindung;
Fig. 5a-c verschiedene Beispiele für mögliche Einparkvorgänge bei verschiedenen Ausgangslenkwinkeln; und
Fig. 6 einen Ablauf des erfindungsgemäßen Verfahrens gemäß der Ausführungsform der vorliegenden Erfindung.

### BESCHREIBUNG DES AUSFÜHRUNGSBEISPIELS

Die nachstehend beschriebene Ausführungsform der vorliegenden Erfindung ist insbesondere für Kraftfahrzeuge anwendbar, die in Längsparklücken einparken, die seitlich zu einem Straßenverlauf angeordnet sind. Insbesondere bei solchen Längsparklücken ist es erforderlich, dass zunächst ein erster Einschlag und im Anschluss ein Gegenlenken erfolgt. Die Abstimmung dieser beiden Umlenkpunkte machen es für den Fahrer besonders schwierig, in solche Parklücken einzuparken.

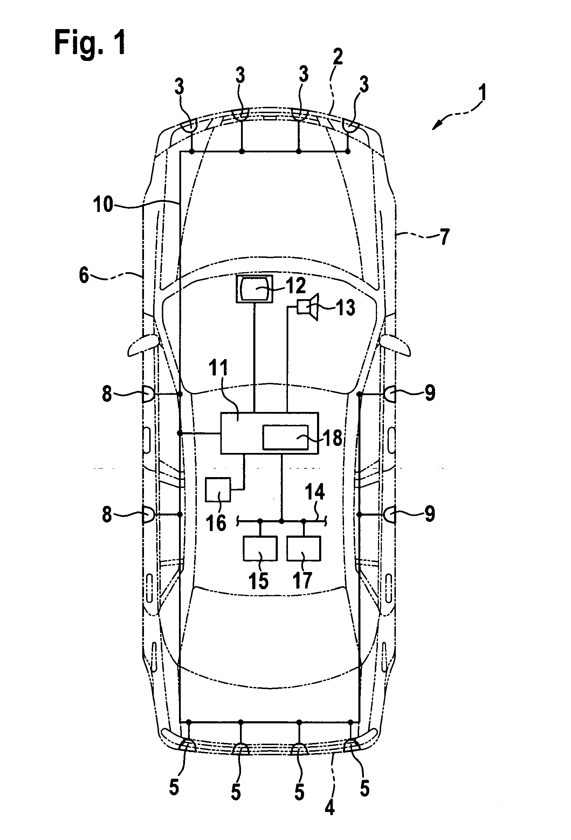

Fig. 1 zeigt schematisch ein Fahrzeug mit einer Vorrichtung zur Ausgabe von Einparkhinweisen gemäß einer Ausführungsform der vorliegenden Erfindung.

In der Figur 1 ist ein Kraftfahrzeug 1 schematisch dargestellt. An einer Fahrzeugvorderseite 2 sind Abstandssensoren 3 angeordnet. An einer Fahrzeugrückseite 4 sind ebenfalls Abstandssensoren 5 angeordnet. An einer linken Fahrzeugseite 6 und an einer rechten Fahrzeugseite 7 sind jeweils ebenfalls Abstandssensoren 8, 9 vorgesehen. Die Abstandssensoren messen Abstände zu Hindernissen in der Fahrzeugumgebung. Die Abstandssensoren 3, 5, 8, 9 sind insbesondere als Ultraschallsensoren ausgeführt. Sie können jedoch auch auf einem anderen Messprinzip basierend, z.B. auf optischen Signalen oder auf Radarsignalen, den Abstand messen. Ferner sind auch Videosensoren möglich, die einen Abstand aus einer aufgenommenen Bildinformation ermitteln. Die Abstandssensoren 3, 5, 8, 9 liefern ihre Messdaten bzw. ermittelten Abstandswerte über einen Datenbus 10 an eine Auswerteeinheit 11 mit einem Speicher 18 im Fahrzeug 1. Die Auswerteeinheit 11 ermittelt die Abstände zu Hindernissen in der Fahrzeugumgebung und die Lage dieser Hindernisse in der Fahrzeugumgebung. Dies geschieht insbesondere dadurch, dass die Messdaten der einzelnen Sensoren miteinander verbunden ausgewertet werden. Die Auswerteeinheit 11 kann die Sensoren auch in verschiedenen Messmodi betreiben, so dass z.B. die Geschwindigkeit einer Signalaussendung an die jeweilige Fahrzeuggeschwindigkeit angepasst wird. Somit können die Messbedingungen zwischen einem Vermessen einer Parklücke bei einem Vorbeifahren an der Parklücke und bei einem im allgemeinen langsamer durchgeführten Einparkvorgang angepasst werden. Aus den Abstandswerten kann die Auswerteeinheit 11 somit eine Umgebungskarte des Fahrzeugs bestimmen.

Ferner ist die Auswerteeinheit 11 dazu ausgelegt, eine geeignete Parklücke zu ermitteln und eine Trajektorie in diese Parklücke zu bestimmen. Ferner bestimmt sie bevorzugt auch Ausgaben an den Fahrer. Für die Ausgabe ist die Auswerteeinheit 11 mit einer Anzeige 12 verbunden. Ferner sind auch akustische Ausgaben über einen Lautsprecher 13 möglich. Die Anzeige 12 ist insbesondere als ein Bildschirm einer Navigationsanzeige in dem Fahrzeug ausgeführt. Ferner können Anweisungen auch über eine Anzeige in einem Kombinationsinstrument, über ein Head-Up-Display oder über LED-Anzeigen, die zusätzlich an der Armaturentafel zu montieren sind, ausgegeben werden. Um eine Bewegung des Fahrzeugs zu ermitteln, ist die Auswerteeinheit 11 bevorzugt über einen Datenbus 14, der insbesondere als ein CAN-Bus ausgeführt ist, mit mindestens einem Wegstreckensensor 15 verbunden. In einer bevorzugten Ausführungsform ist der Wegstreckensensor 15 als ein Raddrehzahlsensor ausgeführt, der eine Radbewegung des Fahrzeugs misst. Wird eine Radbewegung detektiert, so wird anhand der Raddrehung und dem Radumfang eine von dem Fahrzeug zurückgelegte Strecke bestimmt. Um auch die Richtung der Fahrt ermitteln zu können, ist die Auswerteeinheit 11 ferner mit einem Lenkwinkelsensor 16 verbunden, mittels dem die aktuelle Lenkrichtung des Fahrzeugs ausgewertet werden kann. Eine Fahrtrichtung vorwärts oder rückwärts wird insbesondere aus einer Ganghebelstellung bzw. aus einer Einstellung eines Getriebes durch einen Gangsensor 17 ermittelt.

In der vorliegenden Ausführungsform ist die Auswerteeinheit 11 dazu ausgelegt, auch die Reaktionszeit des Fahrers zu bestimmen. Sie vergleicht unter Ausnutzung des Wegstreckensensors 15 insbesondere, wie schnell der Fahrer einer über die Anzeige 12 oder den Lautsprecher 13 ausgegebenen Anhalteanweisung folgt. Bevorzugt kann sie damit Fahrer in verschiedene Kategorien unterteilen, z.B. langsam, normal und schnell. Ferner kann jedoch auch eine Reaktionszeit als Zeitinformation ermittelt werden. Ebenfalls kann die Geschwindigkeit, mit der der vorgegebene Lenkwinkel eingestellt wird, herangezogen werden. Ergänzend kann die Auswerteeinheit 11 zur Bestimmung der Reaktionszeit über den Datenbus 14 auch auf andere Fahrzeugsysteme, z.B. ein ACC (Adaptive Cruise Control)-System zugreifen, die nicht zur Lenkung gehören.

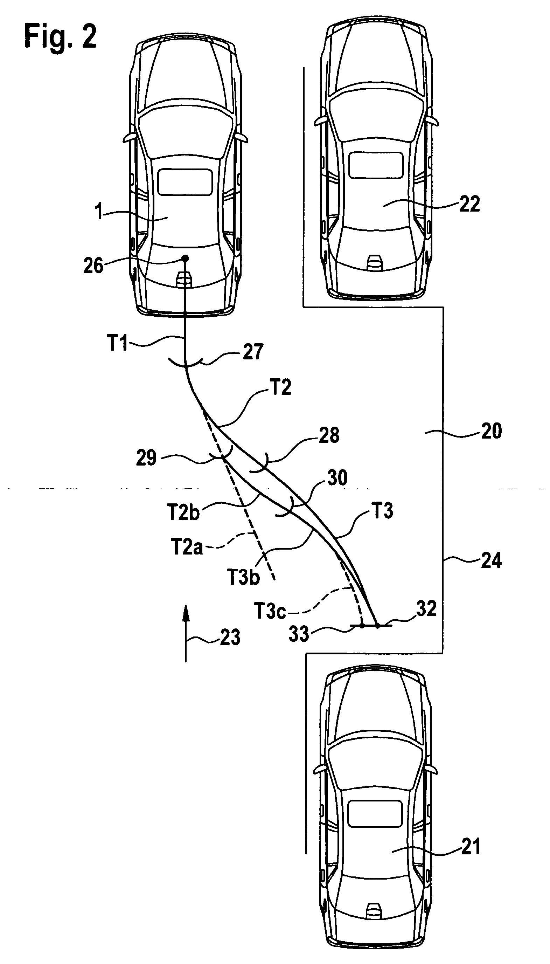

Fig. 2 illustriert einen Einparkvorgang unter Ausnutzung der Vorrichtung zur Ausgabe von Einparkhinweisen gemäß der Ausführungsform der vorliegenden Erfindung;

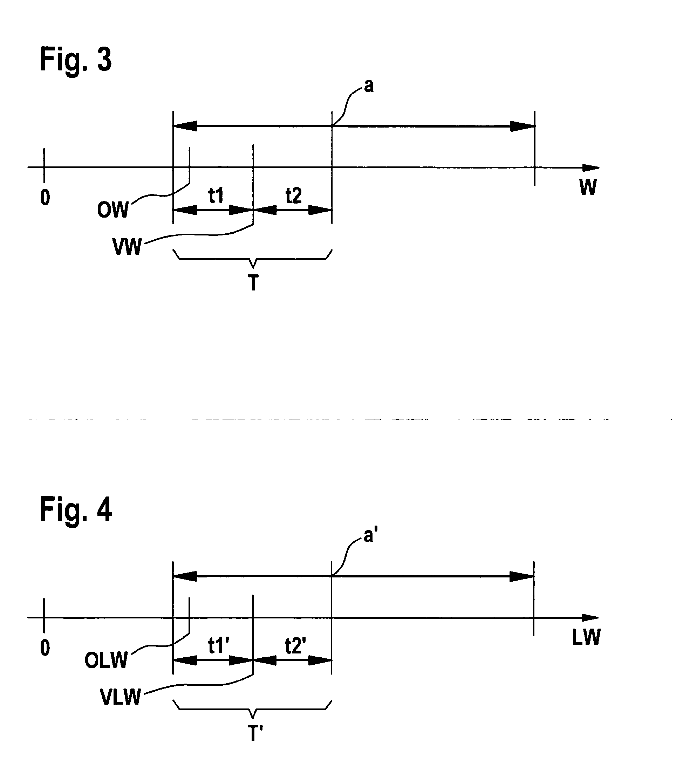

Prinzipiell ist der Einparkvorgang in eine Mehrzahl von Sektionen T1 bis T3 mit einem jeweiligen verschiedenen, aber innerhalb einer Sektion konstanten Vorgabe-Lenkwinkel VLW (vgl. Fig. 4) unterteilt (hier: gerade-rechts-links), wobei jeweils zwischen zwei Sektionen T1, T2 bzw. T2, T3 ein Anhaltepunkt 27 bzw. 28 liegt, der nach einer entsprechenden Anhalteanweisung innerhalb eines Anhaltewegs W (vgl. Fig. 3) anzufahren ist.

Das Fahrzeug 1 weist die in der Figur 1 erläuterten Einrichtungen zur Durchführung der Ausführungsform des erfindungsgemäßen Verfahrens auf. Das Fahrzeug 1 soll in eine Parklücke 20 einparken, die zwischen einem ersten Fahrzeug 21 und einem zweiten Fahrzeug 22 liegt. Das Fahrzeug 1 ist zuvor an dem ersten Fahrzeug 21, der Parklücke 20 und dem zweiten Fahrzeug 22 in Pfeilrichtung 23 vorbeigefahren, wobei die an der rechten Fahrzeugseite 7 angeordneten Sensoren 9 den Abstand zu den Fahrzeugen 21, 22 vermessen haben. Dabei hat sich herausgestellt, dass zwischen den Fahrzeugen 21, 22 die Parklücke 20 frei ist, in die das Fahrzeug 1 einparken kann. Eine von den Sensoren 9 ermittelte Abstandslinie 24 gibt die Abmaße an, die von den Sensoren bei der Vorbeifahrt ermittelt wurden.

Die Auswerteeinheit 11 bestimmt über eine ihr zugeordnete Recheneinheit die Trajektorie von der aktuellen Position 26 des Fahrzeugs 1 in die Parklücke 20. Aus der Abstandsmessung, in Verbindung mit der Messung der zurückgelegten Wegstrecke mittels des Wegstreckensensors 15 und der Messung des Lenkeinschlags mittels des Lenkwinkelsensors 16 ist der Auswerteeinheit 11 dabei zu jeder Zeit bekannt, welche Position das Fahrzeug 1 gegenüber den übrigen Fahrzeugen 21, 22 und insbesondere gegenüber der Parklücke 20 einnimmt.

Daher kann die Auswerteeinheit 11 eine erste Vorgabetrajektorie bestehend aus den Sektionen T1, T2, T3 ausgehend von der aktuellen Position 26 des Fahrzeugs 1 berechnen, die in die Parklücke 20 führt. Diese Trajektorie ist hinsichtlich des gewählten Referenzpunktes 26, hier des Mittelpunktes der Hinterachse des Fahrzeugs, in der Figur 2 dargestellt.

An der Ausgangsposition 26 erhält der Fahrer eine entsprechende Lenkwinkel-Einstellanweisung und anschließend eine Fahranweisung, sobald der Lenkwinkel eingestellt ist.

Ausgehend von der Ausgangsposition 26 des Fahrzeugs 1 muss der Fahrer zunächst ein kurzes Stück bis zum Anhaltepunkt 27 gerade zurücksetzen. Kurz vor dem ersten Anhaltepunkt 27 erhält der Fahrer eine Anhalteanweisung.

Nach dem Anhalten am Anhaltepunkt 27 erhält er eine Lenkwinkelanweisung für die Sektion T2 und anschließend eine erneute Fahranweisung, sobald der neue Lenkwinkel eingestellt ist. Sodann setzt er seine Fahrt fort bis zum zweiten Anhaltepunkt 28 usw.

Ständig überprüft die Auswerteeinheit 11, ob die Position und der aktuelle Lenkwinkel des Fahrzeugs 1 es noch ermöglichen, einen erfolgreichen Einparkvorgang durchzuführen. Wie "erfolgreich" dabei definiert wird, kann in einem oder mehreren entsprechenden Kriterien festgelegt werden, z. B. maximale Anzahl von Zügen, minimale Zuglänge, maximales Hineinragen in die Gegenfahrbahn, minimaler bzw. maximaler Abstand zum Bordstein, maximaler Abstand zu einer durch benachbart parkende Fahrzeuge definierten Referenzlinie, maximale Winkelabweichung zur Bordsteinrichtung bzw. zu einer Referenzlinie, minimaler bzw. maximaler Abstand zu vorderer und hinterer Parklückenbegrenzung.

Wird festgestellt, dass ein erfolgreicher Einparkvorgang nicht möglich ist, so erfolgt ein Korrekturhinweis über die Anzeige 12 und/oder den Lautsprecher 13 an den Fahrer, nämlich die Aufforderung sofort anzuhalten und einen bestimmten Lenkwinkel einzustellen.

Beim vorliegenden Ausführungsbeispiel wird der Lenkwinkel für die zweite Sektion T2 kurz nach deren Beginn vom Fahrer derart verändert, dass er auf die gestrichelt eingezeichnete Trajektorie T2a führt, welche einen erfolgreichen Einparkvorgang nicht ermöglichen würde. Entsprechend ergehen eine Anhalteaufforderung und eine Lenkwinkel-Korrekturanweisung am darauf angefahrenen Anhaltepunkt 29, um das Fahrzeug auf einer neuen erfolgreichen Trajektorie bestehend aus den Sektionen T2b und anschließend T3b bis zur Endposition 32 zu bringen.

Nach dem Anhalten am neuen Anhaltepunkt 30 erhält der Fahrer eine Lenkwinkelanweisung für die Sektion T3b und anschließend eine erneute Fahranweisung, sobald der neue Lenkwinkel eingestellt ist. Wie deutlich erkennbar ist, wird der Lenkwinkel für die dritte Sektion T3b ebenfalls kurz nach deren Beginn vom Fahrer derart verändert, dass er auf die gestrichelt eingezeichnete Trajektorie T3c mit dem Endpunkt 33 führt. Dieser Endpunkt 33 weicht zwar vom ursprünglich geplanten Endpunkt 32 ab, liegt aber immer noch im Bereich gültiger Endpunkte für einen erfolgreichen Einparkvorgang, so dass keine Korrekturanweisung erfolgt, da eine solche nur dann ergeht, wenn ein erfolgreiches Einparken nicht mehr möglich ist.

Fig. 3 zeigt eine schematische Darstellung des noch zu fahrenden Anhaltewegs und einer robusten Anhaltewegvorgabe gemäß der Ausführungsform der vorliegenden Erfindung;

Bei der Ausführungsform der vorliegenden Erfindung wird die Möglichkeit berücksichtigt, das der Fahrer Fehler beim Einhalten des vorgegebenen Anhaltewegs VW innerhalb eines festzulegenden Toleranzbereichs T macht. Der dem Fahrer vorgegebene Anhalteweg VW, an dessen Ende er angehalten haben soll, kann dadurch von einem optimalen Anhalteweg OW abweichen.

Der Doppelpfeil a in Fig. 3 bezeichnet den Bereich möglicher Anhaltewege W, die ein erfolgreiches Einparken ermöglichen, wie im voraus definiert. Anschaulich verständlich ist, dass eine Einengung des "erfolgreichen" Einparkens auf eine einzige Endposition auf einen engeren Bereich a führt als eine Festlegung von einer Mehrzahl möglicher Endpositionen.

Der optimale Weg ist mit dem Bezugszeichen OW bezeichnet und liegt knapp oberhalb der unteren Grenze des möglichen Bereichs a. Bei einer Vorgabe des optimalen Anhaltewegs OW würde man ein hohes Risiko eingehen, dass der Fahrer in einen Bereich unterhalb des möglichen Bereichs a an einer Zwischenposition gelangt. Dies hätte zur Folge, dass eine Korrekturanweisung notwendig wird, damit der Einparkvorgang fortgesetzt werden kann. Das ausführungsformgemäße Verfahren sieht dagegen den Toleranzbereich T vor, innerhalb dessen ein erfolgreiches Einparken mit hoher Wahrscheinlichkeit gewährleistet ist, dessen obere und untere Hälfte durch zwei Doppelpfeile mit Bezugszeichen t1, t2 links bzw. rechts des vorgegebenen Anhalteweges VW eingezeichnet sind.

Somit wird beim Beispiel gemäß Fig. 3 nicht der optimale Anhalteweg OW, sondern ein um die linke Hälfte t1 des Toleranzbandes T größerer Anhalteweg als die untere Grenze des Bereichs a der möglichen Anhaltewege bzw. -trajektorien vorgegeben. Selbstverständlich wird der optimale Anhalteweg OW immer dann vorgegeben, wenn der vorgegebene Toleranzbereich T um den optimalen Anhalteweg OW vollständig innerhalb des möglichen Bereichs liegt.

Die Breite des Toleranzbandes T kann dabei ein fester Parameter sein oder aber abhängig von beispielsweise der Parklückenlänge oder von der gefahrenen Geschwindigkeit vom System vorgebbar sein. Ein fester Parameter hat den Vorteil höherer Transparenz für den Fahrer, während ein dynamisch vorgebbarer Wert für unkritische Parklücken einen größeren Toleranzbereich zulassen wird als für enge Parklücken. Eine Möglichkeit zur Bestimmung des Toleranzbereichs ist die statistische Varianz oder ein entsprechendes Vielfaches der statistischen Varianz von Anhaltewegen, die mit den vom Einparksystem verwendeten Hinweisen bei verschiedenen Fahrern erreicht werden.

Die Toleranzbreite sollte im übrigen so bemessen sein, dass die typischen Fehler des Fahrers beim Einhalten des Anhaltewegs kleiner sind. Dazu kann entweder ein statistischer Wert über viele Fahrer oder auch ein individuell bestimmter Wert des aktuellen Fahrers herangezogen werden.

Fig. 4 zeigt eine schematische Darstellung des eingestellten Lenkwinkels und einer robusten Lenkwinkelvorgabe gemäß der Ausführungsform der vorliegenden Erfindung;

Bei der Ausführungsform der vorliegenden Erfindung wird ebenfalls die Möglichkeit berücksichtigt, dass der Fahrer Fehler innerhalb eines festzulegenden Toleranzbereichs T' des Lenkwinkels LW macht. Der dem Fahrer vorgegebene Lenkwinkel VLW wird dadurch in der Regel von einem optimalen Lenkwinkel OLW abweichen.

Der Doppelpfeil a' in Fig. 4 bezeichnet den Bereich möglicher Lenkwinkel LW, die ein erfolgreiches Einparken ermöglichen, wie im voraus definiert. Wiederum führt eine Einengung des "erfolgreichen" Einparkens auf eine einzige mögliche Parkposition auf einen engeren Bereich a' als eine Festlegung von einer Mehrzahl möglicher Parkpositionen.

Der optimale Lenkwinkel ist mit dem Bezugszeichen OLW bezeichnet. Das ausführungsformgemäße Verfahren sieht für den Lenkwinkel LW den Toleranzbereich T' vor, innerhalb dessen ein erfolgreiches Einparken mit hoher Wahrscheinlichkeit gewährleistet ist, dessen obere und untere Hälfte durch zwei Doppelpfeile mit Bezugszeichen t1', t2' links bzw. rechts des vorgegebenen Lenkwinkels VLW eingezeichnet sind.

Auch hier gibt das System nicht den optimalen Lenkwinkel OLW vor, sondern einen um die linke Hälfte t1' des Toleranzbandes T' größeren Lenkwinkel als die untere Grenze des Bereichs a' der möglichen Lenkwinkel LW. Selbstverständlich wird der optimale Lenkwinkel OLW immer dann vorgegeben, wenn der vorgegebene Toleranzbereich T' um den optimalen Lenkwinkel OLW vollständig innerhalb des möglichen Bereichs liegt.

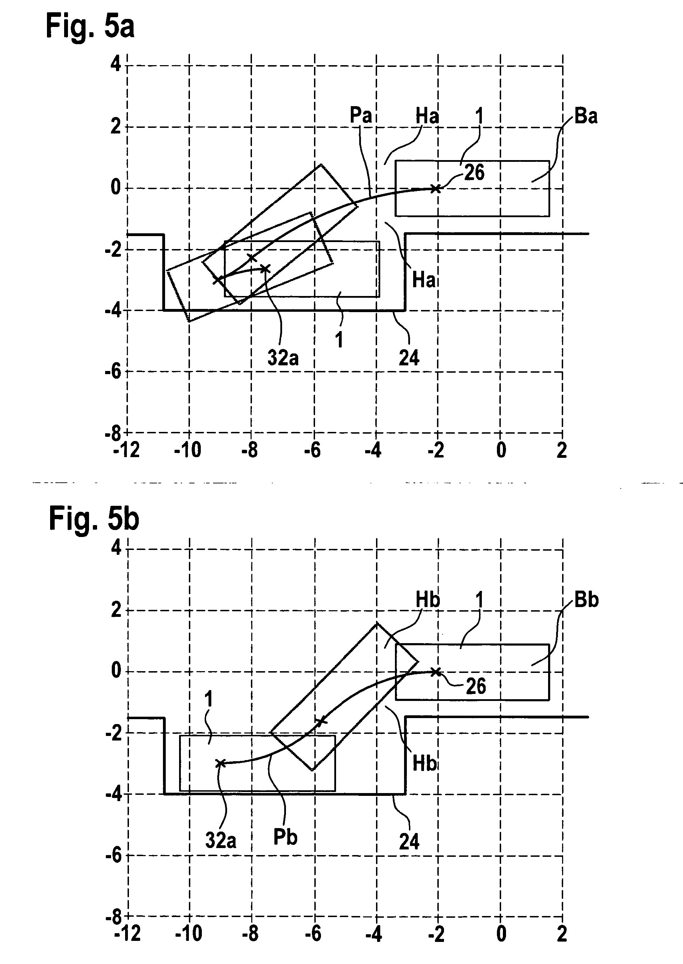

Fig. 5a-c zeigen verschiedene Beispiele für mögliche Einparkvorgänge bei verschiedenen Ausgangslenkwinkeln. Die Ausgangsposition für die in Fig. 5a bis c gezeigten beispielhaften Einparkvorgänge ist stets die in Fig. 2 mit Bezugszeichen 26 bezeichnete Position.

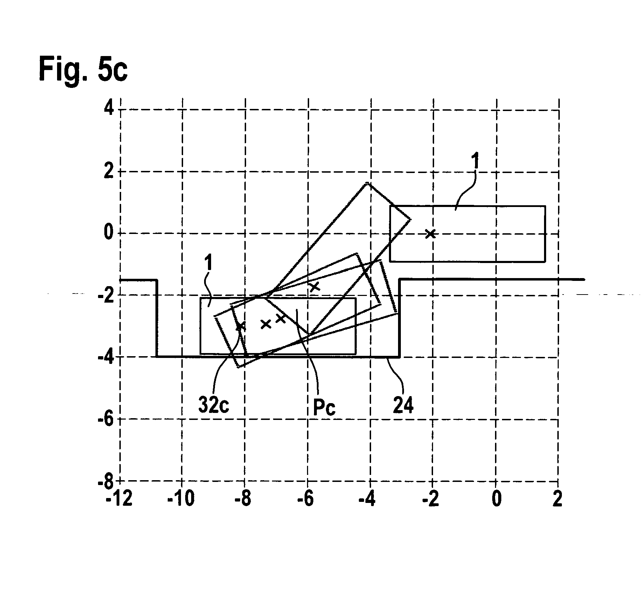

Im Fall von Fig. 5a macht der Fahrer anfangs einen Einschlag von 52%, in Fig. 5b von 83% und in Fig. 5c von 91 %.

Wie aus dem Vergleich der Fig. 5a bis c entnehmbar, ist das Einparken mit allen verschiedenen anfänglichen Lenkeinschlägen möglich, führt jedoch über unterschiedliche Einparkwege Pa bis Pc zu unterschiedlichen Parkpositionen 32a bis 32c. Zwar gibt es einen optimalen anfänglichen Lenkeinschlag mit nur zwei Sektionen gemäß Fig. 5b, der auch dem Fahrer als einzustellender Lenkwinkel angezeigt wird, jedoch ist auch in allen anderen Fällen ein erfolgreiches Einparken möglich.

Bei den Darstellungen gemäß Fig. 5a bis c sind zusätzlich als Begrenzungslinien der Verlauf des Bugs Ba-Bc bzw. Hecks Ha-Hc des Fahrzeugs 1 während des Einparkvorgangs eingezeichnet. Auch hier sind deutliche Unterschiede für die verschiedenen möglichen Einparkwege Pa bis Pc erkennbar. Die Verletzung der Grenzen an der Abstandslinie 24 durch die hintere rechte Ecke des Fahrzeugs 1 in Form eines Überragens des Bordsteins mit dem Fahrzeugheck ist bei diesen Beispielen zugelassen, lediglich ein Überfahren des Bordsteins mit den Rädern ist verboten.

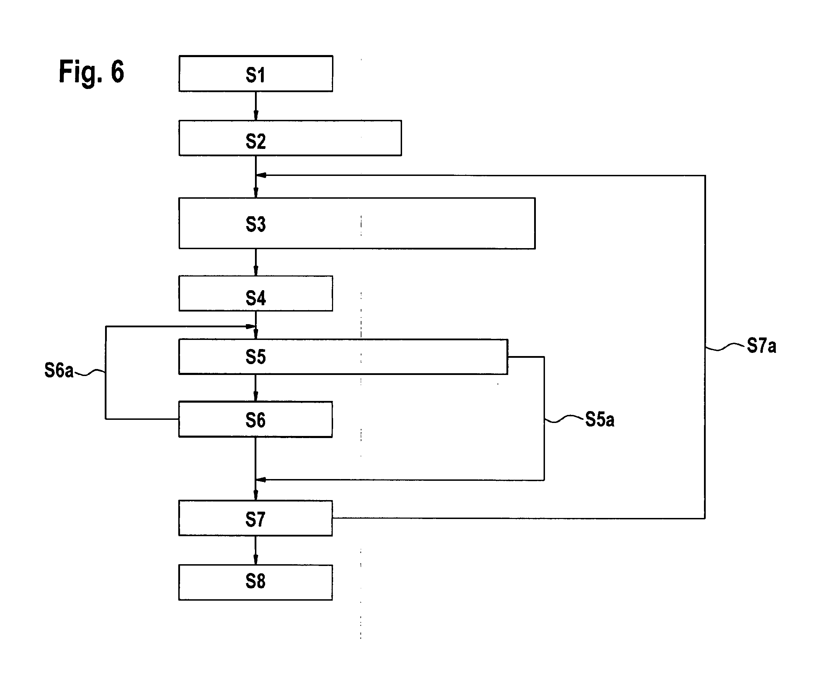

Fig. 6 zeigt einen Ablauf des erfindungsgemäßen Verfahrens gemäß der Ausführungsform der vorliegenden Erfindung.

Das Verfahren beginnt mit dem Schritt S1, bei dem der Fahrer einen Einparkvorgang startet, indem er den Wunsch in das System eingibt, in eine Parklücke einzuparken. Hieran schließt sich in Schritt S2 die Suche nach einer geeigneten Parklücke an, wobei eine geeignete Parklücke ermittelt und vermessen wird Der Fahrer wird angehalten, an der Anfangsposition 26 (vergleiche Figur 2) anzuhalten. Hieran schließt sich in Schritt S3 die Bestimmung eines geplanten Lenkwinkels und eine Trajektorienplanung mit dem geplanten Lenkwinkel an. In Schritt S4 erhält der Fahrer eine entsprechende Lenkanweisung. Danach erfolgt eine Trajektorienplanung mit dem aktuell eingestellten Lenkwinkel in Schritt S5. Stellt sich bei der Trajektorienplanung heraus, dass der Fahrer mit dem eingestellten Lenkwinkel die Endposition erreichen kann, so ergeht in Schritt S6 eine Fahranweisung. Stellt sich in Schritt S5 heraus, dass ein Einparken mit dem aktuellen Lenkwinkel nicht möglich ist, so ergeht eine Korrekturanweisung und das Verfahren springt über den Zweig S5a zum Schritt S7, an dem eine Anhalteanweisung erfolgt. Während der Fahrt springt das Verfahren über den Zweig S6a zyklisch zurück zum Schritt S5, wo die Trajektorienplanung anhand des aktuellen Lenkwinkels aktualisiert wird.

Wird im Schritt S6 festgestellt, dass das Sektionsende erreicht worden ist, so springt das Verfahren ebenfalls zum Schritt S7. Im Schritt S7 wird überprüft, ob der Einparkvorgang beendet ist. Trifft dies zu, so endet das Verfahren in Schritt S8. Ist das Ende des Einparkvorgangs noch nicht erreicht, so springt das Verfahren über den Zweig S7a zurück zum Schritt S3, wo die Trajektorienplanung für die nächste Sektion eingeleitet wird usw.

Obwohl die vorliegende Erfindung vorstehend anhand eines bevorzugten Ausführungsbeispiels erläutert worden ist, ist sie nicht darauf beschränkt, sondern auch in anderer Weise ausführbar.

Optional kann anstelle des aktuell gemessenen Lenkradwinkels auch ein gefilterter Wert des Lenkradwinkels für die Trajektorienplanung verwendet werden. Dadurch kann man eine gewisse Unempfindlichkeit des Verfahrens gegenüber schnellen Schwankungen des Lenkradwinkels (Messrauschen oder auch Rucken oder Zucken genannt) erreichen.

Obwohl bei der oben erläuterten Ausführungsform sowohl Lenkwinkel als auch Anhalteweg robust geplant werden, lassen sich die erfindungsgemäßen Vorteile bereits dann mit gewisser Einschränkung erzielen, wenn nur eine der beiden Größen robust geplant wird.

## Patentansprüche

1. Verfahren zur Ausgabe von Einparkhinweisen an einen Fahrer eines Fahrzeugs, wobei der Einparkvorgang in eine Mehrzahl von Sektionen mit einem jeweiligen konstanten Vorgabe-Lenkwinkel (VLW) unterteilt ist und wobei jeweils zwischen zwei Sektionen ein Anhaltepunkt liegt, der nach einer entsprechenden Anhalteanweisung innerhalb eines Anhaltewegs (W) anzufahren ist, wobei für den Anhalteweg (W) ein Toleranzband (T; T') festgelegt wird und für eine jeweilige Sektion eine entsprechende Anhalteanweisung entsprechend einem Vorgabe-Anhalteweg (VW) unter Berücksichtigung des jeweiligen Toleranzbandes (T; T') festgelegt wird, **dadurch gekennzeichnet, dass** unmittelbar nach dem Anhalten des Fahrzeuges an einem jeweiligen Anhaltepunkt überprüft wird, ob der Anhalteweg in einem gültigen Bereich für ein erfolgreiches Einparken möglicher Anhaltewege liegt, und dass eine Korrekturanweisung zum Einstellen des korrekten Anhaltewegs in Form einer zusätzlichen Sektion nur ausgegeben wird, falls der tatsächliche Anhalteweg außerhalb des Bereichs gültiger Anhaltewege liegt.

2. Verfahren zur Ausgabe von Einparkhinweisen an einen Fahrer eines Fahrzeugs, wobei der Einparkvorgang in eine Mehrzahl von Sektionen mit einem jeweiligen konstanten Vorgabe-Lenkwinkel (VLW) unterteilt ist und wobei jeweils zwischen zwei Sektionen ein Anhaltepunkt liegt, der nach einer entsprechenden Anhalteanweisung innerhalb eines Anhaltewegs (W) anzufahren ist, wobei für den Lenkwinkel (LW) ein Toleranzband (T; T') festgelegt wird und für eine jeweilige Sektion ein entsprechender Vorgabe-Lenkwinkel (VLW) unter Berücksichtigung des jeweiligen Toleranzbandes (T; T') festgelegt wird, **dadurch gekennzeichnet, dass** auch während der Fahrt des Fahrzeugs zyklisch überprüft wird, ob der aktuelle Lenkwinkel in einem gültigen Bereich für ein erfolgreiches Einparken möglicher Lenkwinkelliegt, und dass eine Korrekturanweisung zum Anhalten und zum Einstellen eines korrigierten Lenkwinkels nur ausgegeben wird, falls der betreffende Lenkwinkel außerhalb des Bereichs gültiger Lenkwinkel liegt.

3. Verfahren nach Anspruch 1 oder 2, **dadurch gekennzeichnet, dass** unmittelbar nach dem Anhalten des Fahrzeuges an einem jeweiligen Anhaltepunkt überprüft wird, ob der Anhalteweg in einem gültigen Bereich für ein erfolgreiches Einparken möglicher Anhaltewege liegt, und dass eine Korrekturanweisung zum Einstellen des korrekten Anhaltewegs in Form einer zusätzlichen Sektion nur ausgegeben wird, falls der tatsächliche Anhalteweg ausserhalb des Bereichs gültiger Anhaltewege liegt.

4. Verfahren nach einem der vorherigen Ansprüche, **dadurch** gekennzeichet, dass das Toleranzband (T oder T') bzw. die Toleranzbänder (T; T') dynamisch angepasst wird bzw. werden.

5. Verfahren nach Anspruch 4, **dadurch gekennzeichnet, dass** das dynamische Anpassen des Toleranzbandes (T) für den Anhalteweg (W) unter Berücksichtigung einer statistischen Varianz von erfassten Anhaltewegen erfolgt.

6. Verfahren nach Anspruch 4, **dadurch gekennzeichnet, dass** das dynamische Anpassen des Toleranzbandes (T') für den Lenkwinkel (LW) unter Berücksichtigung einer statistischen Varianz von erfassten Lenkwinkeleinstellungen erfolgt.

7. Verfahren nach Anspruch 1, 2 oder 3, **dadurch gekennzeichnet, dass** die Grösse des jeweiligen Toleranzbandes (T; T') entsprechend verschiedener Fahrerkategorien auswählbar ist.

8. Verfahren nach einem der vorherigen Ansprüche, **dadurch gekennzeichnet, dass** anhand mindestens eines Kriteriums ein erfolgreicher Einparkvorgang im voraus definiert wird, wobei das Kriterium eine Mehrzahl von Endpositionen zulässt.

9. Verfahren nach Anspruch 8, **dadurch gekennzeichnet, dass** das Kriterium aus folgender Gruppe ausgewählt ist: maximale Anzahl von Zügen, minimale Zuglänge, maximales Hineinragen in die Gegenfahrbahn, minimaler bzw. maximaler Abstand zum Bordstein, maximaler Abstand zu einer durch benachbart parkende Fahrzeuge definierten Referenzlinie, maximale Winkelabweichung zur Bordsteinrichtung bzw. zu einer Referenzlinie, minimaler bzw. maximaler Abstand zu vorderer und hinterer Parklückenbegrenzung.

10. Vorrichtung zur Ausgabe von Einparkhinweisen an einen Fahrer eines Fahrzeugs, wobei der Einparkvorgang in eine Mehrzahl von Sektionen mit einem jeweiligen konstanten Vorgabe-Lenkwinkel (VLW) unterteilt ist und wobei jeweils zwischen zwei Sektionen ein Anhaltepunkt liegt, der nach einer entsprechenden Anhalteanweisung innerhalb eines Anhaltewegs (W) anzufahren ist, mit:
einer Umfelderfassungseinheit (3, 5, 8, 9) zum Erfassen einer Parklücke;
einer Auswerteeinheit (11) zum Festlegen eines Toleranzbandes (T; T') für den Anhalteweg (W) und/oder den Lenkwinkel (LW) und zum Festlegen einer entsprechenden Anhalteanweisung entsprechend einem Vorgabe-Anhalteweg (VW) für eine jeweilige Sektion unter Berücksichtigung des jeweiligen Toleranzbandes (T; T'), wobei unmittelbar nach dem Anhalten des Fahrzeuges an einem jeweiligen Anhaltepunkt überprüft wird, ob der Anhalteweg in einem gültigen Bereich für ein erfolgreiches Einparken möglicher Anhaltewege liegt, und dass eine Korrekturanweisung zum Einstellen des korrekten Anhaltewegs in Form einer zusätzlichen Sektion nur ausgegeben wird, falls der tatsächliche Anhalteweg außerhalb des Bereichs gültiger Anhaltewege liegt;
einer Ausgabeeinheit (12, 13) zur Ausgabe von Anweisungen für Lenkwinkel und Anhaltepunkte ansprechend auf die Auswerteeinheit (11);
einem Lenkwinkelsensor (16) zur Ermittlung des aktuellen Lenkwinkels; und
einem Wegstreckensensor (15) zur Bestimmung der zurückgelegten Wegstrecke.

11. Vorrichtung zur Ausgabe von Einparkhinweisen an einen Fahrer eines Fahrzeugs, wobei der Einparkvorgang in eine Mehrzahl von Sektionen mit einem jeweiligen konstanten Vorgabe-Lenkwinkel (VLW) unterteilt ist und wobei jeweils zwischen zwei Sektionen ein Anhaltepunkt liegt, der nach einer entsprechenden Anhalteanweisung innerhalb eines Anhaltewegs (W) anzufahren ist, mit:
einer Umfelderfassungseinheit (3, 5, 8, 9) zum Erfassen einer Parklücke;
einer Auswerteeinheit (11) zum Festlegen eines Toleranzbandes (T; T') für den Anhalteweg (W) und/oder den Lenkwinkel (LW) und zum Festlegen einer entsprechenden Anhalteanweisung entsprechend einem Vorgabe-Anhalteweg (VW) und/oder eines entsprechenden Vorgabe-Lenkwinkels (VLW) für eine jeweilige Sektion unter Berücksichtigung des jeweiligen Toleranzbandes (T; T'), wobei auch während der Fahrt des Fahrzeugs zyklisch überprüft wird, ob der aktuelle Lenkwinkel in einem gültigen Bereich für ein erfolgreiches Einparken möglicher Lenkwinkel liegt, und dass eine Korrekturanweisung zum Anhalten und zum Einstellen eines korrigierten Lenkwinkels nur ausgegeben wird, falls der betreffende Lenkwinkel außerhalb des Bereichs gültiger Lenkwinkel liegt;
einer Ausgabeeinheit (12, 13) zur Ausgabe von Anweisungen für Lenkwinkel und Anhaltepunkte ansprechend auf die Auswerteeinheit (11);
einem Lenkwinkelsensor (16) zur Ermittlung des aktuellen Lenkwinkels; und
einem Wegstreckensensor (15) zur Bestimmung der zurückgelegten Wegstrecke.

## Claims

1. Method for outputting parking instructions to a driver of a vehicle, wherein the parking process is divided into a multiplicity of sections with a respective constant predefined steering angle (VLW), and wherein in each case a stopping point is located between two sections, which stopping point is to be driven to within a stopping distance (W) after a corresponding stopping instruction, wherein a tolerance range (T; T') is defined for the stopping distance (W), and a corresponding stopping instruction corresponding to a predefined stopping distance (VW) is defined for a respective section taking into account the respective tolerance range (T; T'), **characterized in that** directly after the stopping of the vehicle at a respective stopping point it is checked whether the stopping distance is in a valid range of possible stopping distances for successful parking, and **in that** a correction instruction for setting the correct stopping distance is output in the form of an additional section only if the actual stopping distance is outside the range of valid stopping distances.

2. Method for outputting parking instructions to a driver of a vehicle, wherein the parking process is divided into a multiplicity of sections with a respective constant predefined steering angle (VLW), and wherein in each case a stopping point is located between two sections, which stopping point is to be driven to within a stopping distance (W) after a corresponding stopping instruction, wherein a tolerance range (T; T') is defined for the steering angle (LW), and a corresponding predefined steering angle (VLW) is defined for a respective section taking into account the respective tolerance range (T; T'), **characterized in that** cyclical checking is also carried out during the travel of the vehicle to determine whether the current steering angle is in a valid range of possible steering angles for successful parking, and **in that** a correction instruction for stopping and for setting a corrected steering angle is output only if the respective steering angle is outside the range of valid steering angles.

3. Method according to Claim 1 or 2, **characterized in that** directly after the vehicle stops at a respective stopping point it is checked whether the stopping distance is in a valid range of possible stopping distances for successful parking, and **in that** a correction instruction for setting the correct stopping distance in the form of an additional section is output only if the actual stopping distance is outside the range of valid stopping distances.

4. Method according to one of the preceding claims, **characterized in that** the tolerance range (T or T') and/or the tolerance ranges (T; T') is/are adapted dynamically.

5. Method according to Claim 4, **characterized in that** the dynamic adaptation of the tolerance range (T) for the stopping distance (W) is carried out taking into account a statistical variance of sensed stopping distances.

6. Method according to Claim 4, **characterized in that** the dynamic adaptation of the tolerance range (T') for the steering angle (LW) is carried out taking into account a statistical variance of sensed steering angle settings.

7. Method according to Claim 1, 2 or 3, **characterized in that** the magnitude of the respective tolerance range (T; T') can be selected in accordance with various driver categories.

8. Method according to one of the preceding claims, **characterized in that** a successful parking process is defined in advance on the basis of at least one criterion, wherein the criterion permits a multiplicity of end positions.

9. Method according to Claim 8, **characterized in that** the criterion is selected from the following group: maximum number of trains, minimum train length, maximum projection into the oncoming carriageway, minimum or maximum distance from the curb, maximum distance from a reference line which is defined by adjacently parked vehicles, maximum angular deviation from the curb direction or from a reference line, minimum or maximum distance from front and rear parking space boundaries.

10. Device for outputting parking instructions to a driver of a vehicle, wherein the parking process is divided into a multiplicity of sections with a respective constant predefined steering angle (VLW), and wherein in each case a stopping point is located between two sections, which stopping point is to be driven to within a stopping distance (W) after a corresponding stopping instruction, having:
a surroundings-sensing unit (3, 5, 8, 9) for sensing a parking space;
an evaluation unit (11) for defining a tolerance range (T; T') for the stopping distance (W) and/or the steering angle (LW) and for defining a corresponding stopping instruction corresponding to a predefined stopping distance (VW) for a respective section taking into account the respective tolerance range (T; T'), wherein immediately after the stopping of the vehicle at a respective stopping point checking is carried out to determine whether the stopping distance is in a valid range of possible stopping distances for successful parking, and in that a correction instruction for setting the correct stopping distance in the form of an additional section is output only if the actual stopping distance is outside the range of valid stopping distances;
an output unit (12, 13) for outputting instructions for the steering angle and stopping points by addressing the evaluation unit (11);
a steering angle sensor (16) for determining the current steering angle; and
a travel distance sensor (15) for determining the distance travelled.

11. Device for outputting parking instructions to a driver of a vehicle, wherein the parking process is divided into a multiplicity of sections with a respective constant predefined steering angle (VLW), and wherein in each case a stopping point is located between two sections, which stopping point is to be driven to within a stopping distance (W) after a corresponding stopping instruction, having:
a surroundings-sensing unit (3, 5, 8, 9) for sensing a parking space;
an evaluation unit (11) for defining a tolerance range (T; T') for the stopping distance (W) and/or the steering angle (LW) and for defining a corresponding stopping instruction corresponding to a predefined stopping distance (VW) and/or a corresponding predefined steering angle (VLW) for a respective section taking into account the respective tolerance range (T; T'), wherein cyclical checking is also carried out during the travel of the vehicle to determine whether the current steering angle is in a valid range of possible steering angles for successful parking, and in that a correction instruction for stopping and for setting a corrected steering angle is output only if the respective steering angle is outside the range of valid steering angles;
an output unit (12, 13) for outputting instructions for the steering angle and stopping points by addressing the evaluation unit (11);
a steering angle sensor (16) for determining the current steering angle; and
a travel distance sensor (15) for determining the distance travelled.

## Revendications

1. Procédé pour délivrer des indications de stationnement au conducteur d'un véhicule,
la manoeuvre de stationnement étant divisée en plusieurs segments qui présentent tous un angle de braquage de consigne (VLW) respectif constant,
un point de référence par lequel doit passer un parcours de référence (W) selon une indication de référence correspondante étant situé chaque fois entre deux segments,
une bande de tolérance (T; T') étant définie pour le parcours de référence (W) et une indication de référence qui correspond à un parcours de référence de consigne (VW) étant définie en tenant compte de chaque bande de tolérance (T; T') de chaque segment, **caractérisé en ce que**
immédiatement après le passage du véhicule en un point de référence particulier, le procédé vérifie si le parcours de référence est situé dans une plage valide de parcours de référence qui permettent un stationnement réussi et
**en ce qu'**une indication de correction qui ajuste le parcours de référence correct est délivrée sous la forme d'un segment supplémentaire uniquement au cas où le parcours de référence effectif est situé à l'extérieur de la plage de parcours de référence valides.

2. Procédé pour délivrer des indications de stationnement au conducteur d'un véhicule,
la manoeuvre de stationnement étant divisée en plusieurs segments qui présentent tous un angle de braquage de consigne (VLW) respectif constant,
un point de référence par lequel doit passer un parcours de référence (W) selon une indication de référence correspondante étant situé chaque fois entre deux segments,
une bande de tolérance (T; T') étant définie pour l'angle de braquage (LW) et un angle correspondant de braquage de consigne (VLW) étant défini pour chaque segment en tenant compte de la bande de tolérance (T; T') concernée,
**caractérisé en ce que**
même pendant le déplacement du véhicule, le procédé vérifie cycliquement si l'angle de braquage effectif est situé dans une plage valide d'angles de braquage qui permettent un stationnement réussi et
**en ce qu'**une indication de correction en vue d'arrêter et de former un angle de braquage corrigé n'est délivrée qu'au cas où l'angle de braquage concerné est situé à l'extérieur de la plage d'angles de braquage valides.

3. Procédé selon les revendications 1 ou 2, **caractérisé en ce qu'**immédiatement après le passage du véhicule en chaque point de référence, le procédé vérifie si le parcours de référence est situé dans une plage valide de parcours de référence qui permettent un braquage réussi et **en ce qu'**une indication de correction qui ajuste le parcours de référence correct n'est délivrée sous la forme d'un segment supplémentaire qu'au cas où le parcours de référence effectif est situé à l'extérieur de la plage de parcours de référence valides.

4. Procédé selon l'une des revendications précédentes, **caractérisé en ce que** la bande de référence (T ou T') ou les bandes de tolérance (T; T') sont adaptées dynamiquement.

5. Procédé selon la revendication 4, **caractérisé en ce que** l'adaptation dynamique de la bande de tolérance (T) du parcours de référence (W) s'effectue en tenant compte d'une variance statistique de parcours de référence saisis.

6. Procédé selon la revendication 4, **caractérisé en ce que** l'adaptation dynamique de la bande de tolérance (T') d'angles de braquage (LW) s'effectue en tenant compte d'une variance statistique de réglages enregistrés d'angles de braquage.

7. Procédé selon la revendication 1, 2 ou 3, **caractérisé en ce que** la taille de chaque bande de tolérance (T; T') peut être sélectionnée en fonction de différentes catégories de conducteurs.

8. Procédé selon l'une des revendications précédentes, **caractérisé en ce qu'**une manoeuvre de stationnement réussie est définie au départ à l'aide d'au moins un critère, le critère permettant plusieurs positions finales.

9. Procédé selon la revendication 8, **caractérisé en ce que** le critère est sélectionné dans l'ensemble suivant : nombre maximum de parcours, longueur minimale de parcours, pénétration maximale dans la bande de circulation opposée, distance minimale ou maximale par rapport au seuil de bordure de la chaussée, distance maximale par rapport à une ligne de référence définie par des véhicules stationnés au voisinage, écart angulaire maximal par rapport à la direction du seuil de bordure de la chaussée ou à une ligne de référence, distance minimale ou maximale par rapport à la limite avant et la limite arrière de l'espace de stationnement.

10. Dispositif en vue de délivrer des indications de stationnement au conducteur d'un véhicule,
la manoeuvre de stationnement étant divisée en plusieurs segments qui présentent tous un angle de braquage de consigne (VLW) respectif constant,
un point de référence par lequel doit passer un parcours de référence (W) selon une indication de référence correspondante étant situé chaque fois entre deux segments,
et présentant :
une unité (3, 5, 8, 9) de saisie de l'environnement qui détecte un emplacement de stationnement,
une unité d'évaluation (11) qui définit une bande de tolérance (T; T') pour le parcours de référence (W) et/ou l'angle de braquage (LW) et qui définit une indication appropriée de référence qui correspond à un parcours de référence de consigne (VW) pour chaque segment en tenant compte de la bande de tolérance (T; T') concernée, tandis que
immédiatement après le passage du véhicule en un point de référence particulier, le procédé vérifie si le parcours de référence est situé dans une plage valide de parcours de référence qui permettent un stationnement réussi et
le procédé ne délivre une indication de correction qui ajuste le parcours de référence correct sous la forme d'un segment supplémentaire que si le parcours de référence effectif est situé à l'extérieur de la plage de parcours de référence valides,
une unité d'émission (12, 13) qui délivre des indications d'angle de braquage et de points de référence qui agissent sur l'unité d'évaluation (11),
un détecteur (16) d'angle de braquage qui détermine l'angle de braquage en cours et
un détecteur (15) de chemin parcouru qui détermine le chemin parcouru.

11. Dispositif pour délivrer des indications de stationnement au conducteur d'un véhicule,
la manoeuvre de stationnement étant divisée en plusieurs segments qui présentent tous un angle de braquage de consigne (VLW) respectif constant,
un point de référence par lequel doit passer un parcours de référence (W) selon une indication de référence correspondante étant situé chaque fois entre deux segments,
et présentant :
une unité (3, 5, 8, 9) de saisie de l'environnement qui détecte un emplacement de stationnement,
une unité d'évaluation (11) qui définit une bande de tolérance (T; T') pour le parcours de référence (W) et/ou l'angle de braquage (LW) et qui définit une indication appropriée de référence qui correspond à un parcours de référence de consigne (VW) et/ou à un angle de braquage de consigne (VLW) correspondant pour chaque segment en tenant compte de la bande de tolérance (T; T') concernée, tandis que
même pendant le déplacement du véhicule, le procédé vérifie cycliquement si l'angle de braquage effectif est situé dans une plage valide d'angles de braquage qui permettent un stationnement réussi et
le procédé ne délivre une indication de correction en vue d'arrêter et de former un angle de braquage corrigé que si l'angle de braquage concerné est situé à l'extérieur de la plage d'angles de braquage valides,
une unité d'émission (12, 13) qui délivre des indications d'angle de braquage et de points de référence qui agissent sur l'unité d'évaluation (11),
un détecteur (16) d'angle de braquage qui détermine l'angle de braquage en cours et
un détecteur (15) de chemin parcouru qui détermine le chemin parcouru.
